# EUROPÄISCHE PATENTANMELDUNG

(11) **EP 1 659 079 A1**
(43) Veröffentlichungstag der Anmeldung: **24.05.2006**
(21) Anmeldenummer: 05025332.7
(22) Anmeldetag: 21.11.2005
(51) Int. Cl.: B65G 47/96

(54) **Kipp-Förderelement für einen Sorter**

(30) Priorität: 22.11.2004 DE 102004056206
(71) Anmelder: Beumer Maschinenfabrik GmbH & Co. KG, 59269 Beckum (DE)
(72) Erfinder: Hintz, Andreas, Dr.-Ing., 59269 Beckum (DE); Wylutzki, Gerhard, 59302 Oelde/Senninghausen (DE)
(74) Vertreter: Hoormann, Walter R.

(57) **Zusammenfassung**

Kipp-Förderelement (1) für einen Sorter (2), dessen antreibbarer Förderstrang aus einer Vielzahl von in Reihe hintereinander angeordneten Förderelementen (1) besteht, die entlang einer im allgemeinen in sich geschlossenen Führung gemeinsam verfahrbar sind, und die jeweils an einer Aufgabestelle mit einem zu sortierenden Stückgutteil zu beschicken sind, welches an einer vorgegebenen Zielstelle einer Mehrzahl von Abgabestellen wieder aus dem Sorter auszuschleusen ist, oder für ein Einzelfahrzeug, dessen Ladefläche durch Kippen zu entleeren ist, mit einem entlang der Führung verfahrbaren Unterwagen (9) und einer über dem Unterwagen (9) angeordneten, eine Förderfläche (6) aufweisenden Förderschale (5), die über mehrere Stützgelenke (12) so am Unterwagen (9) abgestützt ist, daß ihre Förderfläche (6) in einer Grundstellung im wesentlichen parallel zum Unterwagen (9) verläuft, und die mittels eines am Förderelement (1) angeordneten, steuerbaren Kippantriebes (15) aus ihrer Grundstellung wahlweise - in Förderrichtung (4) gesehen - seitlich nach links oder rechts um eine von wenigstens einem Stützgelenk (12) gebildete Schwenkachse relativ zum Unterwagen (9) gesteuert zu verschwenken ist, wobei die Förderschale (5) relativ zum Unterwagen (9) zusätzlich wahlweise um zwei weitere jeweils von wenigstens einem Stützgelenk (12) gebildete (Quer-)Schwenkachsen zu verschwenken ist, welche im vorderen bzw. hinteren Bereich der Förderschale (5) quer zur Förderrichtung (4) verlaufen, wobei wenigstens vier mit gegenseitigem Abstand angeordnete Stützgelenke (12) vorgesehen sind, welche jeweils - ggf. gemeinsam mit einem benachbarten Stützgelenk (12) - eine Schwenkachse bilden, und welche jeweils als entkuppelbare Gelenk-Kupplung mit zwei Gelenk- bzw. Kupplungsteilen (z.B. 13, 14) ausgebildet sind, deren eines Kupplungsteil (14) mit dem Unterwagen (9) und deren anderes Kupplungsteil (13) mit der Förderschale (5) fest verbunden ist, wobei die Stützgelenke (12) in der Grundstellung der Förderschale (5) sämtlichst eingekuppelt und jeweils durch ein lösbares Verriegelungsmittel im eingekuppelten Zustand zu halten sind, und wobei bei einer vorgesehenen Schwenkbewegung der Förderschale (5) um eine ihrer vier Schwenkachsen, die nicht auf dieser Schwenkachse liegenden Stützgelenke (12) gesteuert zu entriegeln sind, so daß die Förderschale (5) unter Entkupplung der entriegelten Stützgelenke (12) um das (die) nicht entriegelte(n) Stützgelenk(e) (12) zu schwenken ist, wenn sie von dem Kippantrieb (15) mit einer nach oben gerichteten Kraft beaufschlagt wird.

## Beschreibung

Die vorliegende Erfindung betrifft ein sogenanntes Kipp-Förderelement nach dem Oberbegriff des Anspruches 1 für einen Sorter, dessen antreibbarer Förderstrang aus einer Vielzahl von in Reihe hintereinander angeordneten, im allgemeinen gelenkig miteinander verbundenen Förderelementen besteht, die entlang einer im allgemeinen in sich geschlossenen Führung gemeinsam verfahrbar sind, und die jeweils an einer Aufgabestelle mit einem zu sortierenden Stückgutteil zu beschicken sind, welches an einer vorgegebenen Zielstelle einer Mehrzahl von Abgabestellen wieder aus dem Sorter auszuschleusen ist. Dabei weist jedes Förderelement einen entlang der Führung verfahrbaren Unterwagen und eine über diesem angeordnete, eine Förderfläche aufweisenden Förderschale auf, die über mehrere Stützgelenke so am Unterwagen abgestützt ist, daß ihre Förderfläche in einer Grundstellung im wesentlichen horizontal

und parallel zum Unterwagen bzw. zur Führung verläuft, und die mittels eines am Förderelement angeordneten, steuerbaren Kippantriebes aus ihrer Grundstellung wahlweise - in Förderrichtung gesehen - seitlich nach links oder rechts um eine jeweils von den Stützgelenken gebildete Schwenkachse relativ zum Unterwagen gesteuert zu verschwenken ist.

Ein solches Kipp-Förderelement ist bspw. aus der EP 0 568 125 A1 bekannt. Bei diesem Förderelement ist die Förderschale mittig über zwei in Förderrichtung fluchtend hintereinander angeordnete, jeweils von einem Achsstummel und einer Lagerschale gebildete, gemeinsam eine Schwenkachse bildende Stützgelenke so an einem Unterwagen abgestützt, daß ihre Förderfläche in einer Grundstellung im wesentlichen horizontal verläuft, und sie ist an vorgegebenen Stellen der Führung mittels eines an dem Förderelement angeordneten, steuerbaren Kippantriebes aus dieser Grundstellung wahlweise seitlich nach links oder rechts zu verschwenken, um das von ihrer Förderfläche abgestützte Stückgutteil an der jeweils vorgegebenen Abgabestelle abzugeben oder um ein seitliches Abrutschen des Stückgutteils beim Durchfahren von Horizontalkurven mit relativ hoher Fördergeschwindigkeit aufgrund der dabei entstehenden Zentrifugalkräfte durch ein Verschwenken der Förderschale entgegen der Richtung der Zentrifugalkräfte zu vermeiden, oder um beim seitlichen Aufgeben eines Stückgutteils zu verhindern, daß das Stückgutteil dabei aufgrund seiner rechtwinklig zur Sorter-Förderrichtung gerichteten Geschwindigkeitskomponente bis über den der Aufgabeseite gegenüberliegenden Längsrand der Förderschale hinausschießt.

Mit diesem bekannten Förderelement sind zwar verschiedene Probleme zu vermeiden, die sich bei höherer Fördergeschwindigkeit und/oder höherer seitlicher Aufgabegeschwindigkeit ergeben, wenn die Förderschalen nur an den Abgabestellen seitlich zu kippen sind, doch sind derartige Förderelemente nicht zum Durchfahren stark ansteigender bzw. abfallender Förderabschnitte geeignet, da es dort bzw. bereits in den in diese übergehenden Vertikalkurven der Führung zu einem Verrutschen des jeweils abgestützten Stückgutteils in bzw. entgegen der Förderrichtung kommt, weil nicht nur der Unterwagen, sondern auch die Förderschale der jeweiligen Neigung folgt.

Ein grundsätzlich ähnliches Förderelement ist aus der EP 1 196 341 B1 bekannt, wobei auch bei diesem Förderelement ein Durchfahren stark geneigter Streckenabschnitte nicht möglich ist, ohne daß es zu einem Verrutschen der Stückgutteile auf den Förderschalen kommt.

Der vorliegenden Erfindung liegt die Aufgabe zugrunde, das Kipp-Förderelement der eingangs beschriebenen Gattung insbesondere dahingehend zu verbessern, daß unter Aufrechterhaltung der bereits im Stand der Technik vorhandenen Möglichkeiten auch ein Durchfahren von Vertikalkurven bzw. von stark ansteigenden oder abfallenden Streckenabschnitten möglich ist, ohne daß es dabei zu einem relativen Verrutschen oder gar zu einem Abgleiten eines von der Förderschale abgestützten Stückgutteils in bzw. entgegen der Förderrichtung kommen kann, wobei zugleich eine möglichst geringe Bauhöhe des Förderelementes angestrebt wird.

Die Lösung dieser Aufgabe erfolgt erfindungsgemäß bei einem gattungsgemäßen Förderelement durch die kennzeichnenden Merkmale des Anspruches 1. Diesen liegt die Überlegung zugrunde, daß ein Verrutschen eines von einer Förderschale abgestützten Stückgutteils dann zu verhindern ist, wenn die Förderschale auch beim Durchfahren von Vertikalkurven sowie ansteigenden bzw. abfallenden Abschnitten der Förderbahn im wesentlichen horizontal verläuft, obwohl ihr Unterwagen der Führung folgt, wenn sie also zusätzlich zu den Möglichkeiten eines seitlichen Kippens relativ zum Unterwagen um quer zur Sorter-Förderrichtung verlaufende Schwenkachsen gesteuert zu kippen ist. Dem steht jedoch scheinbar entgegen, daß die Förderschale zur Ermöglichung ihrer seitlichen Kippbewegungen über die Stützgelenke mit dem Unterwagen gelenkig verbunden ist, so daß ein relatives Verschwenken der Förderschale zum Unterwagen um eine jeweils rechtwinklig zur Förderrichtung verlaufende Schwenkachse nicht möglich erscheint. Dieses ist aber erfindungsgemäß dennoch möglich, wenn gemäß den kennzeichnenden Merkmalen des Anspruches 1 eine ausreichende Anzahl von (wenigstens vier) Stützgelenken vorgesehen ist, und wenn diese in geeigneter Weise als entkuppelbare Gelenkkupplungen ausgebildet sind, so daß ihre Gelenkfunktion jeweils teilweise gezielt aufzuheben ist, und sie daher sowohl zur Bildung von in Förderrichtung verlaufenden Schwenkachsen als auch zur Bildung von rechtwinklig zur Förderrichtung verlaufenden Schwenkachsen verwendbar sind.

Hierfür ist erfindungsgemäß konkret vorgesehen, daß die Förderschale in ihrer Grundstellung über wenigstens vier mit gegenseitigem Abstand in einer Ebene angeordnete, wahlweise gesteuert entkuppelbare Stützgelenke am Unterwagen abgestützt ist, wobei die Stützgelenke jeweils mit zwei Kupplungsteilen ausgebildet sind, von denen das eine Kupplungsteil an der Förderschale und das andere Kupplungsteil an dem Unterwagen angeordnet ist, und wobei die beiden Kupplungsteile im eingekuppelten Zustand mittels eines lösbaren Verriegelungsmittels so gesteuert miteinander zu verriegeln sind, daß sie nicht entkuppelbar aber mittels des Kippantriebes relativ zueinander um wenigstens eine unter Mitwirkung ihres Gelenkes gebildete Schwenkachse zu verschwenken sind, wenn die nicht auf dieser Schwenkachse liegenden übrigen Stützgelenke entriegelt sind, und wobei die beiden Kupplungsteile im entriegelten Zustand mittels des Kippantriebes zu entkuppeln und relativ zueinander um eine andere Schwenkachse zu verschwenken sind, die von anderen eingekuppelten und verriegelten Stützgelenken gebildet wird. Unter einem Verriegeln der Stützgelenke ist vor- und nachstehend mithin ein Vorgang zu verstehen, welcher ein Entkuppeln eines Stützgelenkes verhindert, das Stützgelenk aber nicht blockiert, so daß seine beiden Kupplungsteile im verriegelten Zustand nach wie vor relativ zueinander verschwenkbar sind.

Das erfindungsgemäße Förderelement ermöglicht ersichtlich sämtliche angestrebten Kippbewegungen der Förderschale relativ zum Unterwagen sowohl um in Förderrichtung als auch rechtwinklig zur Förderrichtung verlaufende Schwenkachsen. In der Grundstellung der Förderschale sind sämtliche Stützgelenke eingekuppelt und verriegelt. Soll die Förderschale bspw. aus ihrer Grundstellung nach rechts gekippt werden, so verbleiben die auf der rechten Seite der Förderschale befindlichen Stützgelenke unter Bildung einer Schwenkachse verriegelt, während die auf der linken Seite der Förderschale befindlichen Stützgelenke entriegelt werden. Sie befinden sich daher zunächst noch im eingekuppelten Zustand, können aber bei einer Betätigung des auf die Förderschale einwirkenden Kippantriebes entkuppelt werden, so daß die Förderschale um die von den eingekuppelten und verriegelten rechten Stützgelenken gebildete Schwenkachse zu verschwenken ist. Entsprechend wird verfahren, wenn die Förderschale aus ihrer Grundstellung nach links gekippt werden soll.

Soll der Unterwagen dagegen bei einem Einfahren in einen ansteigenden Abschnitt der Förderstrecke relativ zur Förderschale um eine rechtwinklig zur Förderrichtung verlaufende vordere Schwenkachse so verschwenkt werden, daß die Förderfläche der Förderschale im wesentlichen horizontal verbleibt, so werden alle nicht auf dieser Schwenkachse liegenden Stützgelenke entriegelt. Entsprechend wird verfahren, wenn das Förderelement in einen abfallenden Abschnitt der Förderbahn einfährt, auf dem der Unterwagen relativ zur Förderschale um eine von wenigstens einem hinteren Stützgelenk gebildete Schwenkachse verschwenkt werden soll.

Um ein Stützgelenk sowohl für die Bildung einer in Förderichtung verlaufenden Schwenkachse als auch einer quer zur Förderrichtung verlaufenden Schwenkachse verwenden zu können, können die Stützgelenke so ausgebildet sein, daß sie im eingekuppelten, verriegelten Zustand jeweils ein relatives Verschwenken ihrer beiden Kupplungsteile sowohl um eine im wesentlichen in Förderrichtung verlaufende Schwenkachse als auch um eine im wesentlichen rechtwinklig zur Förderrichtung verlaufende Schwenkachse zulassen, welche jeweils durch das Stützgelenk verläuft. Hierfür ist bevorzugt vorgesehen, daß die Stützgelenke jeweils als entkuppelbares Kugelgelenk ausgebildet sind.

Grundsätzlich können die Stützgelenke aber auch so ausgebildet sein, daß sie nur eine Schwenkbewegung um eine Schwenkachse zulassen, also bspw. als entriegelbare Scharniergelenke. In einem solchen Falle sind bevorzugt an jeder Längs- und Querseite der Förderschale zwei Stützgelenke angeordnet, welche im verriegelten Zustand jeweils paarweise eine Schwenkachse bilden.

Bei einer bevorzugten Ausgestaltung des erfindungsgemäßen Kipp-Förderelementes ist mit vertikalem Abstand unter der Unterseite der Förderschale ein rechtwinkliger Rahmen angeordnet, der über Streben fest mit der Förderschale verbunden ist, wobei dessen Längsholme in Förderrichtung und dessen Querholme quer zur Förderrichtung verlaufen. Die Holme des Rahmens sind in der Grundstellung der Förderschale jeweils in wenigstens einer fest mit dem Unterwagen verbundenen, nach oben offenen Lagerschale abgestützt und bilden jeweils ein Kupplungsteil eines Stützgelenkes, dessen anderes Kupplungsteil von der (den) jeweils zugeordneten Lagerschale(n) gebildet wird. Die Holme sind jeweils durch ein geeignetes Verriegelungsmittel, wie z.B. einen von einem ansteuerbaren Linearmotor ausfahrbaren Anschlag, im eingekuppelten Zustand in den Lagerschalen zu halten.

Wenn die Förderschale um einen ihrer vier jeweils eine Schwenkachse bildenden Holme verschwenkt werden soll, werden die übrigen drei Holme entriegelt, so daß der auf die Förderschale einwirkende Kippantrieb die Förderschale an den übrigen drei Holmen an den Lagerschalen entkuppelt und sie um den Holm verschwenkt, der von seinem Verriegelungsmittel noch verriegelt in seiner Lagerschale gehalten ist. Eine solche Ausgestaltung ist unter Kostengesichtspunkten sehr vorteilhaft, weil derartige Stützgelenke erheblich preiswerter zu fertigen sind als entkuppelbare, entriegelbare Kugelgelenke od.dgl..

Die Verriegelung der Stützgelenke in deren eingekuppeltem Zustand erfolgt bevorzugt elektromechanisch, um die Verriegelungsmittel mittels entsprechender Steuersignale ansteuern und hierdurch eine mechanische Verriegelung bzw. Entriegelung bewirken zu können.

Abweichend von bekannten gattungsgemäßen Förderelementen, die jeweils mit einem eigenen ansteuerbaren Kippantrieb versehen sind, welcher bei Betätigung ein Drehmoment auf die Förderschale ausübt, ist der Kippantrieb bevorzugt als zwischen der Förderschale und dem Unterwagen angeordneter Krafterzeuger ausgebildet, mittels dessen der in der Grundstellung der Förderschale vorhandene Abstand zwischen dem mittleren Bereich der Förderschale und dem Unterwagen gesteuert zu vergrößern ist, wenn die Förderschale relativ zu dem Unterwagen verschwenkt werden soll, bzw. mittels dessen dieser Abstand nach Durchführung einer Kippbewegung wieder auf den Ausgangszustand zu verkleinern ist. Dieser eine Druck- bzw. eine Zugkraft erzeugende Krafterzeuger kann grundsätzlich beliebig ausgebildet und bspw. im wesentlichen senkrecht zwischen der Förderschale und dem Unterwagen angeordnet sein. Letzteres hat jedoch eine relativ große Bauhöhe des Förderelementes zur Folge. Um diese möglichst klein halten zu können, ist bevorzugt zwischen der Förderschale und dem Unterwagen ein als Parallelogrammgestänge ausgebildetes Gelenkgestänge angeordnet, welches mit einem oberen Gestängegelenk im wesentlichen mittig an die Förderschale angelenkt ist, und mit seinem darunterliegenden unteren Gestängegelenk an den Unterwagen angelenkt ist, wobei der Krafterzeuger zwischen den beiden mittleren Gestängegelenken angeordnet sein kann, so daß er in der Grundstellung der Förderschale im wesentlichen parallel zu dieser verläuft. Dabei ist das Gestängegelenk bevorzugt so angeordnet, daß es sich in Förderrichtung erstreckt, um auch die Breite des Förderelementes möglichst klein halten zu können.

Der als Kippantrieb dienende Krafterzeuger ist bevorzugt als pneumatischer Krafterzeuger ausgebildet, der mit Druckluft zu beaufschlagen ist, um zwischen der Förderschale und dem Unterwagen entweder eine Druck- oder Zugkraft zu erzeugen. Er kann mithin bspw. als entsprechend ausgebildete und steuerbare Kolben-Zylinder-Einheit ausgebildet sein. Bevorzugt ist jedoch als Krafterzeuger ein gesteuert mit Druckluft zu beaufschlagender und im übrigen geschlossener elastischer Schlauchabschnitt vorgesehen, dessen Länge sich bei Beaufschlagung mit Druckluft unter Vergrößerung seines Durchmessers verkürzt. Ein solcher Krafterzeuger, wie er von der Fa. Festo angeboten wird, arbeitet mithin in der Art eines "technischen Muskels", bei dem das flexible Schlauchmaterial etwa rautenförmig mit festen Fasern rautenförmig umsponnen ist, wodurch eine dreidimensionale Gitterstruktur entsteht, die beim Einströmen von Druckluft in Umfangsrichtung so verformt wird, daß eine Zugkraft in Axialrichtung entsteht, wobei bei steigendem Innendruck eine Verkürzung des Schlauchelementes bis zu 25% seiner Ausgangslänge entsteht, und dabei bei geringem Energieverbrauch eine erheblich höhere Zugkraft als bei einem vergleichbaren Pneumatikzylinder. Außerdem ist zur Erzeugung der gleichen Kraft lediglich etwa ein Drittel des Querschnittes eines vergleichbaren konventionellen Pneumatikzylinders erforderlich, so daß ein solcher Krafterzeuger für das erfindungsgemäße Kipp-Förderelement in mehrfacher Hinsicht besonders geeignet ist.

Bevorzugte Ausgestaltungen der vorliegenden Erfindung sind in den Unteransprüchen beschrieben.

Die Erfindung ist nachstehend an Ausführungsbeispielen unter Bezugnahme auf eine Zeichnung weiter erläutert. Es zeigt:

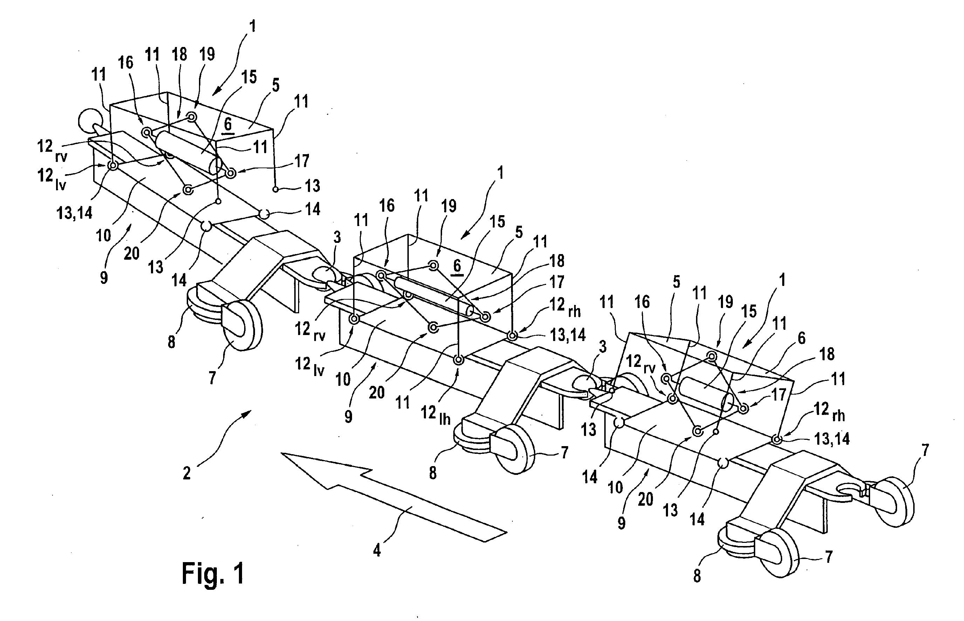

- Fig. 1: eine schematische perspektivische Teilansicht auf einen aus drei Kipp-Förderelementen bestehenden Abschnitt eines Sorters, von denen sich das rechte Kipp-Förderelement in einer schrägen Kippstellung - in Förderrichtung gesehen - nach rechts, das mittlere Kipp-Förderelement in seiner Grundstellung, und sich das in einen Steigungsabschnitt der Förderstrecke eingefahrene linke Kipp-Förderelement in einem Zustand befindet, in dem seine Förderschale bzw. deren Förderfläche trotz des schräg ansteigenden Unterwagens in der Horizontalen verblieben ist, wobei die Förderschale in ihrer Grundstellung über vier Stützgelenke am Unterwagen abgestützt ist und in jeder Kippstellung um zwei Stützgelenke, die gemeinsam eine Schwenkachse bilden;
- Fig. 2: eine ebenfalls stark schematisierte Darstellung des wesentlichen Teils eines Kipp-Förderelementes in einer Seitenansicht in seiner Grundstellung, bei dem die Förderschale über vier als entkuppelbare Kugelgelenke ausgebildete Stützgelenke am Unterwagen abgestützt ist;
- Fig. 3: eine Draufsicht auf ein Kipp-Förderelement in Richtung des Pfeiles III in Fig. 2 gesehen, bei dem die Förderschale über acht als entkuppelbare Scharniergelenke ausgebildete Stützgelenke am Unterwagen abgestützt ist;
- Fig. 4: eine Vorderansicht auf das Kipp-Förderelement gem. Fig. 2 in Richtung des Pfeiles IV in Fig. 2 gesehen;
- Fig. 5: das Kipp-Förderelement gem. den Fig. 2 und 4 in einer Seitenansicht in einer um seine vordere Schwenkachse geneigten Stellung;
- Fig. 6: das Kipp-Förderelement gem. den Fig. 2, 4 und 5 in einer Vorderansicht gem. Fig. 4 in einer um seine linke seitliche Schwenkachse zur linken Seite hin gekippten schrägen Kippstellung;
- Fig. 7: eine Draufsicht/Seitenansicht eines pneumatischen Krafterzeugers, teilweise im Schnitt (untere Hälfte);
- Fig. 8: eine schematisierte Darstellung des Krafterzeugers gem. Fig. 7 im Ausgangszustand gem. Fig. 2;
- Fig. 9: den Krafterzeuger gem. den Fig. 7 und 8 in einer Darstellung gem. Fig. 8 unter innerer Druckbeaufschlagung im verkürzten Zustand gem. Fig. 5;
- Fig. 10: eine schematische Darstellung der Druckluftversorgung für die pneumatischen Krafterzeuger gem. den Fig. 8 und 9;
- Fig. 11: eine schematische Darstellung eines Stützgelenkes im eingekuppelten, verriegelten Zustand;
- Fig. 12: eine Darstellung gem. Fig. 10, bei welcher das noch eingekuppelte Stützgelenk entriegelt ist (gestrichelte Linien) bzw. entkuppelt ist (ausgezogene Linien); und
- Fig. 13: eine schematische perspektivische Darstellung einer anderen Ausgestaltung des erfindungsgemäßen Kipp-Förderelementes, bei welcher die Stützgelenke jeweils von einem Holm eines mit der Förderschale verbundenen Rahmens sowie zwei mit dem Unterwagen verbundenen, nach oben offenen Lagerschalen gebildet sind, zwischen denen jeweils ein Verriegelungsmittel am Unterwagen angeordnet ist.

Fig. 1 zeigt in einer stark schematisierten Darstellung einen aus drei Kipp-Förderelementen 1 bestehenden Förderstrangabschnitt eines elektromotorisch antreibbaren Sorters 2, der aus einer Vielzahl von Kipp-Förderelementen 1 besteht, die jeweils an ihrem vorderen und rückwärtigen Ende über ein Verbindungsgelenk 3 gelenkig mit dem in Förderrichtung 4 vorhergehenden bzw. nachfolgenden Förderelement 1 so gelenkig verbunden sind, daß der entlang einer nicht dargestellten Schienenführung verfahrbare, in sich geschlossene Förderstrang sowohl Horizontalkurven als auch Vertikalkurven durchfahren kann.

Jedes Förderelement 1 weist an seinem oberen Endabschnitt eine Förderschale 5 mit einer Förderfläche 6 auf, die an einer nicht dargestellten Aufgabestelle mit einem nicht dargestellten zu sortierenden Stückgutteil zu beschicken ist, welches an einer vorbestimmten, nicht dargestellten Zielstelle einer Vielzahl von Abgabestellen durch seitliches Kippen der Förderschale 5 - in Förderrichtung 4 gesehen - nach rechts oder nach links wieder aus dem Sorter 2 auszuschleusen ist.

Jedes Förderelement 1 weist weiterhin einen mit Laufrollen 7 und 8 an nicht dargestellten Führungsschienen verfahrbaren Unterwagen auf, der gleichsam ein Kettenglied einer Gliederkette bildet und einen Basiskörper 10 aufweist, an dem die Förderschale 5 in geeigneter Weise am Unterwagen 9 abzustützen ist. Dieses erfolgt in der im mittleren Teil von Fig. 1 dargestellten Grundstellung der Förderschale 5, in welcher deren Förderfläche 6 horizontal und parallel zum Unterwagen bzw. zu der nicht dargestellten Führung verläuft, über vier mit gegenseitigem Abstand in einer Horizontalebene angeordnete Stützgelenke 12, von denen jeweils beiderseits der Längsmittelachse des Förderelementes 1 zwei Stützgelenke 12ₗᵥ, 12ₗₕ bzw. 12ᵣᵥ, 12ᵣₕ mit im wesentlichen gleichem Abstand zur Längsmittelachse so angeordnet sind, daß sie jeweils einem jenseits der Längsmittelachse angeordneten Stützgelenk gegenüberliegen, so daß jeweils zwei einander benachbarte Stützgelenke 12ₗᵥ, 12ₗₕ bzw. 12ᵣᵥ, 12ᵣₕ auf einer in Förderrichtung 4 verlaufenden Achse liegen, und jeweils zwei einander benachbarte Stützgelenke 12ₗᵥ, 12ᵣᵥ bzw. 12ₗₕ, 12ᵣₕ auf einer im wesentlichen rechtwinklig zur Förderrichtung 4 verlaufenden Achse liegen.

Um die in ihrer Grundstellung über die Stützgelenke 12 am Unterwagen 9 abgestützte Förderschale 5 relativ zum Unterwagen 9 verschwenken zu können, sind die Stützgelenke 12 jeweils als entkuppelbare Gelenk-Kupplung mit zwei jeweils ein Gelenkteil aufweisenden bzw. bildenden Kupplungsteilen 13, 14 versehen, von denen das eine (erste) Kupplungsteil 13 an der Förderschale 5 und das andere (zweite) Kupplungsteil 14 am Unterwagen 9 angeordnet ist. Dabei sind die ersten Kupplungsteile 13 der Stützgelenke 12 nicht unmittelbar an der Unterseite der Förderschale 5 angeordnet, sondern jeweils an einen stabförmigen Ansatz 11, der sich von der Unterseite der Fördeschale 5 nach unten erstreckt, und die zweiten Kupplungsteile 14 sind an den Eckpunkten des zum Unterwagen 9 gehörenden Basiskörpers 10 angeordnet.

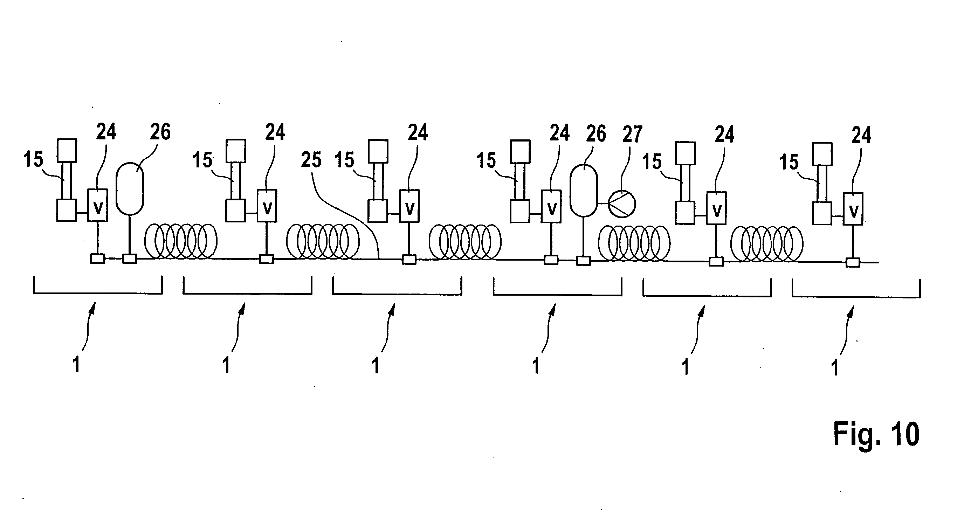

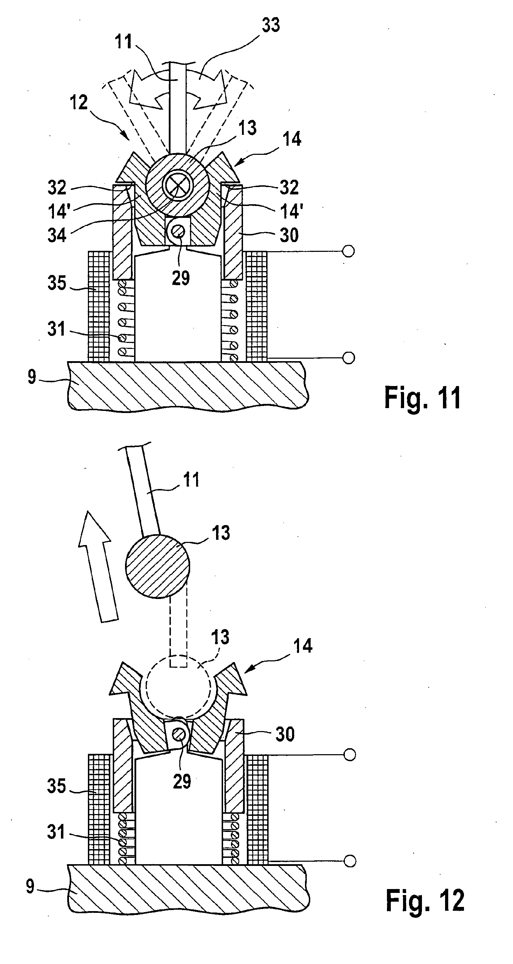

In der Grundstellung der Förderschale 5 sind alle vier Stützgelenke 12 eingekuppelt und jeweils mittels eines in Fig. 1 nicht dargestellten lösbaren Verriegelungsmittels (s. Fig. 10, 11) so verriegelt, daß sie nicht entkuppelbar sind. Dabei sind die Stützgelenke 12 so ausgebildet, daß jeweils ihre beiden Kupplungsteile 13, 14 im eingekuppelten, verriegelten Zustand relativ zueinander um wenigstens eine unter Mitwirkung ihres Gelenkes gebildete Schwenkachse zu verschwenken sind, wenn die nicht auf dieser Schwenkachse liegenden übrigen Stützgelenke 12 entriegelt sind, so daß jeweils deren beide Kupplungsteile 13, 14 zu entkuppeln und dabei relativ zueinander um die von jeweils zwei verriegelten Stützgelenken 12 gebildete Schwenkachse zu verschwenken sind.

Bevor diese Ausbildung und die damit ermöglichte Arbeitsweise an Beispielen weiter erläutert werden, sei noch darauf verwiesen, daß weiterhin zwischen der Förderschale 5 und dem Unterwagen 9 ein als Parallelogrammgestänge 18 ausgebildetes Gelenkgestänge mit vier Hebeln 21 angeordnet ist, welches sich in Förderrichtung 4 erstreckt, wobei dessen oberes Gestängegelenk 19 an die Unterseite der Förderschale 5 und dessen darunterliegendes unteres Gestängegelenk 20 an den Basiskörper 10 des Unterwagens 9 angelenkt ist. Zwischen den beiden mittleren Gelenken 16, 17 des Parallelogrammgestänges 18 ist ein pneumatischer Krafterzeuger 15 angeordnet, der mithin im wesentlichen parallel zur Förderschale 5 verläuft, so daß eine relativ kleine Bauhöhe des Förderelementes 1 zu erzielen ist. Wenn der pneumatische Krafterzeuger 15 in der Grundstellung der Förderschale 5 mit Druckluft beaufschlagt wird, so verkürzt sich der Abstand zwischen den beiden mittleren Gestängegelenken 16, 17, wobei der in der Grundstellung vorhandene Abstand zwischen dem oberen Gestängegelenk 19 und dem unteren Gestängegelenk 20 vergrößert wird, so daß die Förderschale 5 bei einer Betätigung des Krafterzeugers 15 angehoben werden würde, wenn sie nicht über die Stützgelenke 12 mit dem Unterwagen 9 verbunden wäre. Bleiben bei einer Betätigung des Krafterzeugers 15 aber nur zwei einander benachbarte Stützgelenke 12 verriegelt, während die beiden anderen Stützgelenke 12 entriegelt werden, so bewirkt dieses ersichtlich ein Kippen der Förderschale 5 um eine Schwenkachse, die von den beiden verriegelten Stützgelenken 12 gebildet wird, während die beiden anderen entriegelten Stützgelenke 12 dabei entkuppelt werden.

Soll also bspw. die in ihrer Grundstellung befindliche Förderschale 5 eines Förderelementes 1 (s. Fig. 1 Mitte) um eine in Förderrichtung 4 verlaufende Schwenkachse nach rechts gekippt werden, wie dieses im rechten Teil von Fig. 1 dargestellt ist, so werden zunächst die beiden auf der linken Seite befindlichen Stützgelenke 12ₗᵥ und 121h mittels eines jeweils auf ihre Verriegelungseinrichtung einwirkenden Steuersignals entriegelt. Sodann wird der Krafterzeuger 15 gesteuert mit Druckluft beaufschlagt, so daß sich der Abstand zwischen den beiden mittleren Gestängegelenken 16, 17 verkürzt und hierdurch am oberen Gestängegelenk 19 eine Druckkraft auf die Förderschale 5 ausgeübt wird. Da die Förderschale 5 dabei nach wie vor von den beiden Stützgelenken 12ᵣᵥ und 12ᵣₕ gehalten wird, wird die Förderschale 5 dadurch mithin um die von diesen beiden Stützgelenken gebildete Schwenkachse nach rechts verschwenkt.

Soll die Förderschale 5 statt dessen nach links verschwenkt werden, so bleiben die beiden auf dieser Seite befindlichen Stützgelenke 12ₗᵥ und 12ₗₕ verriegelt, während die beiden auf der rechten Seite befindlichen Stützgelenke 12ᵣᵥ, 12ᵣₕ entriegelt werden.

Soll dagegen beim Einfahren eines Förderelementes 1 in eine Vertikalkurve bzw. einen ansteigenden Streckenabschnitt, auf dem der Unterwagen 9 der Führung folgt, die Förderschale 5 im wesentlichen horizontal verbleiben, also relativ zum Unterwagen 9 verschwenkt werden, so verbleiben die beiden vorderen Stützgelenke 12ₗᵥ und 12ᵣᵥ verriegelt, während die beiden hinteren Stützgelenke 12ₗₕ und 12ᵣₕ entriegelt werden, so daß bei einer anschließenden Betätigung des Krafterzeugers 15 ein entsprechendes relatives Verschwenken der Förderschale 5 zum Unterwagen 9 um die von den beiden vorderen Stützgelenken 12ₗᵥ und 12rv erfolgt. Beim Einfahren in einen abfallenden Streckenabschnitt wird wiederum entsprechend verfahren. Es werden also die beiden vorderen Stützgelenke 12ₗᵥ und 12ᵣᵥ entriegelt, während die beiden rückwärtigen Stützgelenke 12ₗₕ und 12ᵣₕ verriegelt bleiben.

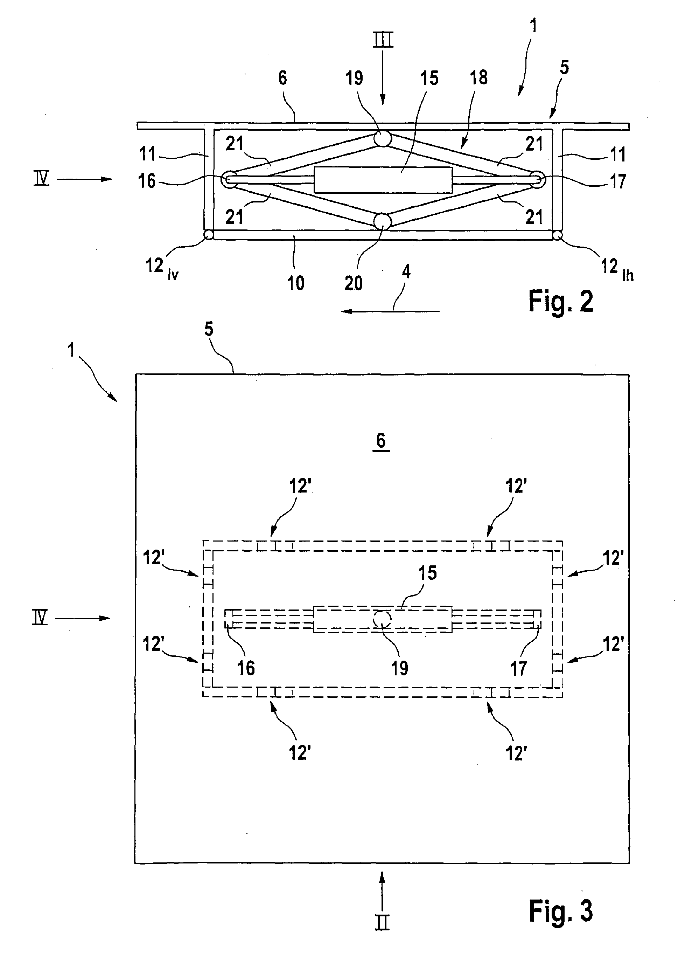

Fig. 2 zeigt den wesentlichen Teil eines solchen Förderelementes 1 noch einmal in der Grundstellung der Förderschale 5 in einer Seitenansicht, wobei von dem Unterwagen 9 nur dessen Basiskörper 10 dargestellt ist.

Fig. 3 zeigt eine Draufsicht auf ein grundsätzlich ähnlich ausgebildetes Förderelement 1, wobei allerdings die Stützgelenke 12' nicht als entkuppelbare Kugelgelenke ausgebildete sind, welche im eingekuppelten, verriegelten Zustand ein relatives Verschwenken ihrer Kupplungsteile 13, 14 in unterschiedlichen Richtungen zulassen, sondern als entkuppelbare Scharniergelenke, so daß an jeder Seite der Förderschale 5 jeweils zwei Stützgelenke 12' vorgesehen sind, welche jeweils paarweise eine Schwenkachse bilden können, wenn die übrigen Stützgelenke 12' dabei entriegelt sind und demgem. bei Betätigung des Krafterzeugers 15 ausgekuppelt werden können.

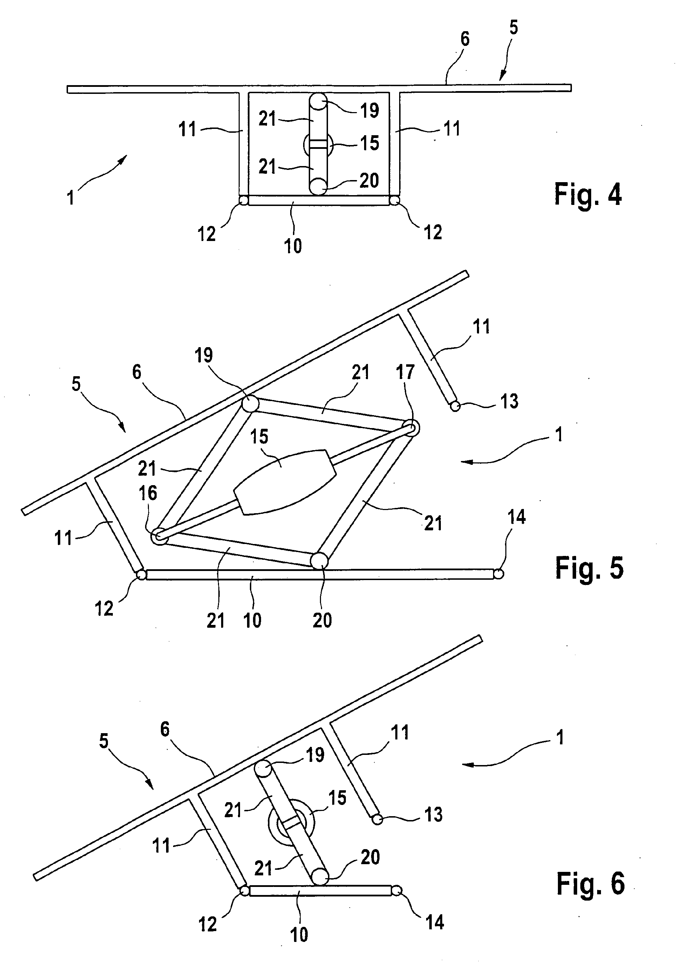

Fig. 4 zeigt ein Förderelement gem. den Fig. 1 und 2 in dessen Grundstellung in einer Vorderansicht. Fig. 5 zeigt das Förderelement 1 in einer Seitenansicht gem. Fig. 2, jedoch in einem Zustand, in dem die Förderschale 5 relativ zu dem Unterwagen 9, von dem lediglich der Basiskörper 10 eingezeichnet ist, um die in Fig. 5 links eingezeichneten Stützgelenke 12 verschwenkt ist, wobei im tatsächlichen Betrieb entgegen der Darstellung in Fig. 5 aber die Förderschale 5 und damit deren Förderfläche 6 im wesentlichen horizontal verläuft und der Unterwagen 9 der ansteigenden Führung folgt.

Fig. 6 zeigt eine Darstellung dieses Förderelementes in einer Vorderansicht, wobei seine Förderschale 5 um die links zur Längsmittelachse angeordneten Stützgelenke 12 nach links gekippt ist.

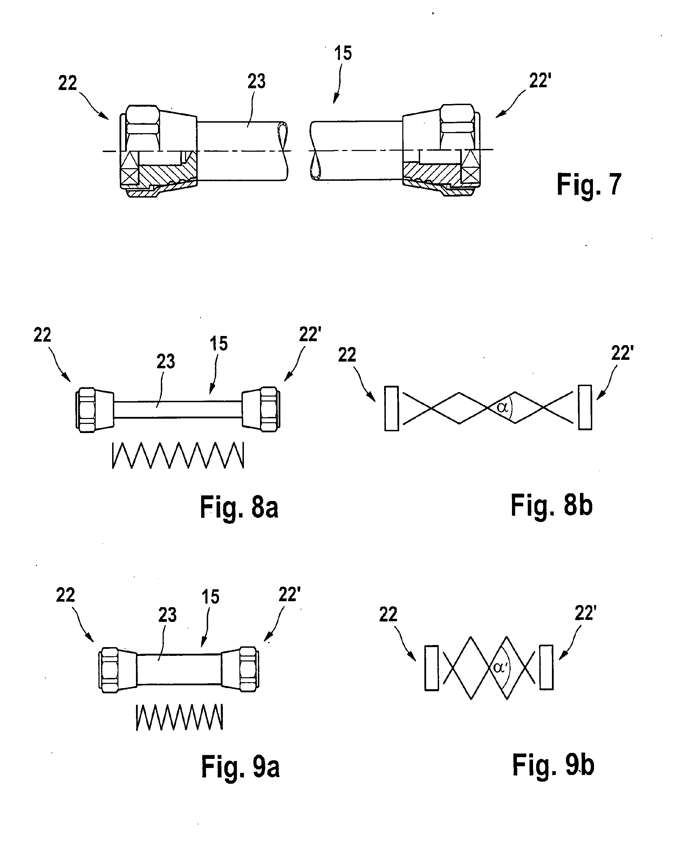

Wie weiter oben bereits ausgeführt worden ist, kann als pneumatischer Krafterzeuger zwar ein pneumatischer Zylinder verwendet werden. Bei den dargestellten Ausführungsbeispielen ist jedoch als Krafterzeuger 15 ein elastischer Schlauchabschnitt 23 vorgesehen, der an seinen beiden Endabschnitten 22, 22' mit endseitigen Anschlußfittings jeweils mit einem mittleren Gestängegelenk 16 bzw. 17 des Parallelogrammgestänges 18 verbunden und gesteuert mit Druckluft zu beaufschlagen ist. Dabei ist der elastische Schlauchabschnitt rautenartig umsponnen, wobei die dadurch gebildete Gitterstruktur bei einströmender Druckluft in Umfangsrichtung verformt wird und zwar so, daß sich die Länge des Schlauchabschnittes 23 unter gleichzeitiger Vergrößerung des Schlauchdurchmessers verkürzt. Dabei wird der ursprünglich vorhandene Rautenwinkel α (s. Fig. 8b) bis zu einem neutralen Winkel α' vergrößert, wobei eine Verkürzung um ca. 25% der Ausgangslänge zu erreichen ist (s. Fig. 9). Da ein solcher Krafterzeuger bei geringem Leistungsverbrauch hohe Kräfte erzeugen kann und zum Erzeugen der gleichen Kraft etwa ein Drittel des Querschnittes eines konventionellen Pneumatikzylinders ausreicht, eignet er sich in idealer Weise als Krafterzeuger für das erfindungsgemäße Kipp-Förderelement 1.

Fig. 10 zeigt in einer schematischen Darstellung wie die Krafterzeuger 15 der einzelnen Förderelemente 1 mit Druckluft versorgt und gesteuert werden können. Hierfür ist jedem Krafterzeuger 15 ein Druckluftventil 24 mit einer ansteuerbaren IR-Steuereinheit zugeordnet, welches an eine durchgehende Druckluftleitung 25 angeschlossen ist, welche mit wenigstens einem Druckluftspeicher 26 verbunden ist, der wiederum von einer Druckluftpumpe 27 gespeist wird, die bspw. über eine Schleifleitung mit elektrischer Energie zu versorgen ist. Zweckmäßigerweise werden mehrere über den Sorter verteilt angeordnete Druckluftspeicher 26 vorgesehen, die dann jeweils an einem Förderelement 1 angeordnet sind.

Die Fig. 11 und 12 zeigen noch beispielhaft eine elektromechanische Verriegelung bzw. Entriegelung für ein als entkuppelbares Kugelgelenk ausgebildetes Stützgelenk 12. Dabei zeigt Fig. 11 das Stützgelenk 12, dessen als Kugel ausgebildetes erstes Kupplungsteil 13 über einen stabförmigen Ansatz 11 an der nicht dargestellten Förderschale 5 befestigt ist, in seinem in das zweite Kupplungsteil 14 eingekuppelten und verriegelten Zustand. Dabei ist das zugleich ein Gelenkteil bildende zweite Kupplungsteil 14 geteilt und besteht aus zwei Gelenkpfannen 14', die mittels eines Zapfens 29 gelenkig miteinander verbunden sind und mittels einer Hülse 30 in der in Fig. 11 dargestellten Weise in eingekuppelter Anlage an dem kugelförmigen ersten Kupplungsteil 13 gehalten werden. Die Hülse 30 wird durch eine Feder 31 gegen einen Anschlag 32 des zweiten Kupplungsteils 14 gedrückt. In diesem eingekuppelten und verriegelten Zustand läßt sich das über den Ansatz 11 mit der Förderschale 5 verbundene kugelförmige erste Kupplungsteil 13 nach allen Seiten verschwenken, also auch wahlweise gemäß dem Doppelpfeil 33 nach links oder rechts um eine senkrecht zur Zeichnungsebene verlaufende Schwenkachse 34, aber auch um eine rechtwinklig hierzu verlaufende Schwenkachse.

Um das Stützgelenk entriegeln und sodann seine beiden Kupplungsteile 13, 14 entkuppeln zu können, ist die Hülse 30 von einer Ringspule 35 umgeben, welche die Hülse 30 gegen die Kraft der Feder 31 nach unten zieht, wenn die Ringspule 35 mit einer Spannung beaufschlagt wird, wie dieses in Fig. 12 dargestellt ist. Dabei bleibt das kugelförmige erste Kupplungsteil 13 zunächst noch eingekuppelt, ist jedoch bereits entriegelt, so daß die beiden Gelenkpfannen 14' um den sie verbindenden Zapfen 29 nach außen geschwenkt werden, wenn die Förderschale 5 um andere Stützgelenke 12 verschwenkt wird.

Das Einkuppeln und Verriegeln erfolgt entsprechend umgekehrt. Dabei wird das kugelförmige erste Kupplungsteil bis auf das zweite Kupplungsteil 14 abgesenkt und damit in dieses eingekuppelt. Zur Verriegelung wird die Ringspule 35 von der Stromquelle abgeschaltet, so daß die Hülse 30 von der Feder 31 wieder nach oben bewegt wird und dabei das Stützgelenk 12 verriegelt.

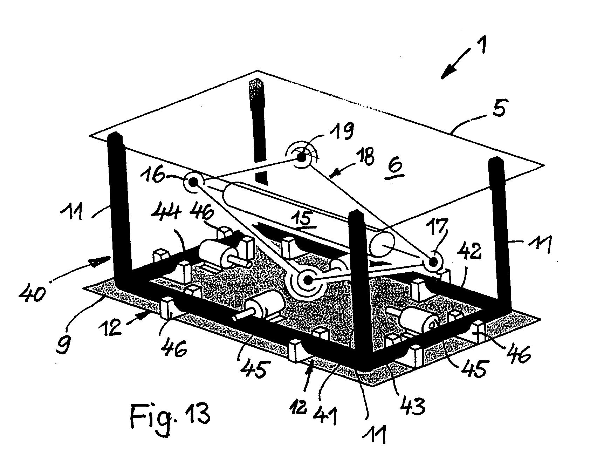

Fig. 13 zeigt in einer stark schematisierten, perspektivischen Darstellung eine Variante des erfindungsgemäßen Kipp-Förderelementes 1, bei welcher die Stützgelenke 12 zwischen der Förderschale 5 und dem nur mit seiner Oberseite angedeuteten Unterwagen 9 nicht wie bei der in den Fig. 1, 2 und 4 - 6 dargestellten Ausführung als entkuppelbare Kugelgelenke ausgebildet sind, deren mit dem Unterwagen 9 fest verbundene Kupplungsteile 14 an den vier Eckpunkten des einen Teil des Unterwagens 9 bildenden, rechteckigen Basiskörpers 10 angeordnet sind, und deren andere Kupplungsteile 13 an vier stabförmigen vertikalen Ansätzen 11 der Förderschale 5 angeordnet sind, welche sich von deren Unterseite aus vertikal nach unten erstrecken. Zwar sind auch bei dieser Ausbildung in den vier Eckbereichen der Förderschale 5 vertikale Streben 11 angeordnet, welche sich von der Unterseite der Förderschale 5 aus nach unten erstrecken, doch sind die Streben 11 jeweils an ihrem unteren Ende mit einem parallel zur Förderschale 5 verlaufenden rechtwinkligen Rahmen 40 verbunden, der aus zwei in Förderrichtung verlaufenden Längsholmen 41, 42 sowie aus zwei quer zur Förderrichtung verlaufenden Querholmen 43, 44 besteht, die jeweils einen runden Querschnitt aufweisen.

Wie aus Fig. 13 erkennbar ist, ist jeder der Holme 41 - 44 in der dargestellten Grundstellung der Förderschale 5 in zwei mit gegenseitigem Abstand angeordneten, nach oben offenen Lagerschalen 46 abgestützt, wobei jeder Holm ein Kupplungsteil eines Stützgelenkes 12 bildet und die beiden ihm zugeordneten Lagerschalen 46 das andere Kupplungsteil.

Wenn die aus der Förderschale 5, den Vertikalstreben 11 und dem Rahmen 40 gebildete Einheit in der dargestellten Weise auf den Unterwagen 9 aufgesetzt ist, sind die Holme 41 - 44 jeweils in ihre Lagerschalen 46 eingekuppelt. Um die eingekuppelten Holme 41 - 44 in der Grundstellung mit dem Unterwagen 9 zu verriegeln, ist jedem Holm ein mittig zwischen seinen beiden Lagerschalen 46 am Unterwagen 9 befestigtes Verriegelungsmittel 45 zugeordnet, welches bei dem dargestellten Ausführungsbeispiel aus einem Linearantrieb in der Art eines Spindelmotors od.dgl. besteht, dessen Spindel aus einer nach innen gefahrenen Entriegelungsstellung nach außen in eine Verriegelungsstellung zu fahren ist, wie dieses in Fig. 13 bei dem dem Längsholm 41 zugeordneten Verriegelungsmittel 45 dargestellt ist. In der Grundstellung der Förderschale 5 sind wenigstens zwei der vier Verriegelungsmittel 45 im Verriegelungszustand, so daß der Rahmen 40 fest am Basiskörper 10 des Unterwagens 9 gehalten ist. Soll die Förderschale 5 bspw. um die von dem Längsholm 41 gebildete Schwenkachse relativ zum Unterwagen 9 verschwenkt werden, so verbleibt lediglich das dem Längsholm 41 zugeordnete Verriegelungsmittel 45 mit diesem im Verriegelungseingriff, während die übrigen drei Verriegelungsmittel 45 durch entsprechende Ansteuerung in ihren Entriegelungszustand gebracht werden, wie dieses in Fig. 13 dargestellt ist. Wird sodann der Krafterzeuger betätigt, so daß er über das Parallelogrammgestänge 18 an dessen oberem Gelenk 19 eine Druckkraft auf die Unterseite der Förderschale 5 ausübt, so werden mithin die zunächst noch in ihre Lagerschalen 46 eingekuppelten Holme 42 - 44 aus ihren Lagerschalen 46 entkuppelt und die Lagerschale 5 wird zusammen mit den Streben 11 sowie dem Rahmen 40 um dessen Längsholm 41 verschwenkt.

Wenn die Lagerschale 5 mittels des Krafterzeugers 15 wieder in ihre parallel zum Unterwagen 9 verlaufende Grundstellung zurückgeschwenkt worden ist, wird der Rahmen 40 an wenigstens einem weiteren Holm mit dem diesem zugeordneten Verriegelungsmittel 45 verriegelt. Soll die Förderschale 5 um eine andere Schwenkachse verschwenkt werden, also bspw. um den Querholm 44, so wird das diesem zugeordnete Verriegelungsmittel 45 in seinen Verriegelungszustand gebracht und die übrigen Verriegelungsmittel 45 werden entriegelt, so daß danach in entsprechender Weise verfahren werden kann.

Mit der vorliegenden Erfindung wurde ein Kipp-Förderelement geschaffen, mit dem sämtliche Bedürfnisse der Praxis in hervorragender Weise zu befriedigen sind, da die Förderschale in allen gewünschten Richtungen relativ zum Unterwagen zu verschwenken ist, wobei die jeweilige Steuerung der jeweiligen Kippbewegung in bekannter Weise durch entsprechende Steuersignale erfolgen kann, welche an den entsprechenden Stellen der Sorterführung erzeugt werden, um die jeweils erforderliche Ent- bzw. Verriegelungen auszulösen und sodann die Krafterzeuger zu betätigen.

Schließlich sei noch darauf verwiesen, daß das erfindungsgemäße Kipp-Förderelement ersichtlich auch für ein Einzelfahrzeug verwendbar ist, dessen Ladefläche durch Kippen zu entleeren ist, wobei das Einzelfahrzeug das Förderelement bildet, und dessen Ladefläche der Förderschale entspricht.

### Bezugszeichenliste

| | | | |
|---|---|---|---|
| **1** | Kipp-Förderelement | | |
| **2** | Sorter | | |
| **3** | Verbindungsgelenk | | |
| **4** | Förderrichtung | | |
| **5** | Förderschale | | |
| **6** | Förderfläche (von 5) | | |
| **7** | Laufrollen | | |
| **8** | Laufrollen | | |
| **9** | Unterwagen | | |
| **10** | Basiskörper | | |
| **11** | stabförmige Ansätze (von 5) | | |
| **12, 12'** | Stützgelenk | **12**ᵢᵥ | Stützgelenk |
| **13** | erstes Kupplungsteil (von 12) | **12**ᵢₕ | Stützgelenk |
| **14** | zweites Kupplungsteil (von 12) | **12**ᵣᵥ | Stützgelenk |
| **14'** | Gelenkpfanne | | |
| **15** | Krafterzeuger | **12**ᵣₕ | Stützgelenk |
| **16** | vorderes Gestângegelenk | | |
| **17** | hinteres Gestângegelenk | | |
| **18** | Parallelogrammsgestänge | | |
| **19** | oberes Gestângegelenk | | |
| **20** | unteres Gestângegelenk | | |
| **21** | Hebel | | |
| **22, 22'** | Endabschnitte | | |
| **23** | Schlauchabschnitt (von 15) | | |
| **24** | Druckluftventil mit Steuereinheit | | |
| **25** | Drucklufleitung | | |
| **26** | Druckluspeicher | | |
| **27** | Drucklufpumpe | | |
| **28** | Scheifleitung | | |
| **29** | Zapfen | | |
| **30** | Hülse | | |
| **31** | Feder | | |
| **32** | Anschlag | | |
| **33** | Doppelpfeil | | |
| **34** | Schwenkachse | | |
| **35** | Ringspule | | |
| **40** | Rahmen | | |
| **41** | Längsholm (von 40) | | |
| **42** | Längsholm (von 40) | | |
| **43** | Querholm (von 40) | | |
| **44** | Querholm (von 40) | | |
| **45** | Verriegelungsmittel | | |
| **46** | Lagerschale | | |
| | | | |
| **α** | Rautenwinkel | | |
| | | | |
| **α'** | neutraler Winkel | | |

## Patentansprüche

1. Kipp-Förderelement (1) für einen Sorter (2), dessen antreibbarer Förderstrang aus einer Vielzahl von in Reihe hintereinander angeordneten Förderelementen (1) besteht, die entlang einer im allgemeinen in sich geschlossenen Führung gemeinsam verfahrbar sind, und die jeweils an einer Aufgabestelle mit einem zu sortierenden Stückgutteil zu beschicken sind, welches an einer vorgegebenen Zielstelle einer Mehrzahl von Abgabestellen wieder aus dem Sorter auszuschleusen ist, oder für ein Einzelfahrzeug, dessen Ladefläche durch Kippen zu entleeren ist, mit einem entlang der Führung verfahrbaren Unterwagen (9) und einer über dem Unterwagen (9) angeordneten, eine Förderfläche (6) aufweisenden Förderschale (5), die über mehrere Stützgelenke (12) so am Unterwagen (9) abgestützt ist, daß ihre Förderfläche (6) in einer Grundstellung im wesentlichen parallel zum Unterwagen (9) verläuft, und die mittels eines am Förderelement (1) angeordneten, steuerbaren Kippantriebes (15) aus ihrer Grundstellung wahlweise - in Förderrichtung (4) gesehen - seitlich nach links oder rechts um eine von wenigstens einem Stützgelenk (12) gebildete Schwenkachse relativ zum Unterwagen (9) gesteuert zu verschwenken ist, **dadurch gekennzeichnet, daß** die Förderschale (5) relativ zum Unterwagen (9) zusätzlich wahlweise um zwei weitere jeweils von wenigstens einem Stützgelenk (12) gebildete (Quer-)Schwenkachsen zu verschwenken ist, welche im vorderen bzw. hinteren Bereich der Förderschale (5) quer zur Förderrichtung (4) verlaufen, wobei wenigstens vier mit gegenseitigem Abstand angeordnete Stützgelenke (12) vorgesehen sind, welche jeweils - ggf. gemeinsam mit einem benachbarten Stützgelenk (12) - eine Schwenkachse bilden, und welche jeweils als entkuppelbare Gelenk-Kupplung mit zwei Gelenk- bzw. Kupplungsteilen (z.B. 13, 14) ausgebildet sind, deren eines Kupplungsteil (14) mit dem Unterwagen (9) und deren anderes Kupplungsteil (13) mit der Förderschale (5) fest verbunden ist, wobei die Stützgelenke (12) in der Grundstellung der Förderschale (5) sämtlichst eingekuppelt und jeweils durch ein lösbares Verriegelungsmittel im eingekuppelten Zustand zu halten sind, und wobei bei einer vorgesehenen Schwenkbewegung der Förderschale (5) um eine ihrer vier Schwenkachsen, die nicht auf dieser Schwenkachse liegenden Stützgelenke (12) gesteuert zu entriegeln sind, so daß die Förderschale (5) unter Entkupplung der entriegelten Stützgelenke (12) um das (die) nicht entriegelte(n) Stützgelenk(e) (12) zu schwenken ist, wenn sie von dem Kippantrieb (15) mit einer nach oben gerichteten Kraft beaufschlagt wird.

2. Kipp-Förderelement nach Anspruch 1, **dadurch gekennzeichnet, daß** vier Stützgelenke (12) vorgesehen sind, von denen jeweils beiderseits der Längsmittellinie des Förderelementes (1) zwei Stützgelenke (12ₗᵥ, 12ₗₕ; 12ᵣᵥ, 12ᵣₕ) mit im wesentlichem gleichem Abstand zur Längsmittellinie so angeordnet sind, daß sie jeweils einem jenseits der Längsmittelachse angeordneten Stützgelenk auf einer rechtwinklig zur Förderrichtung (4) verlaufenden Linie gegenüberliegen (Fig. 1).

3. Kipp-Förderelement nach Anspruch 2, **dadurch gekennzeichnet, daß** die Stützgelenke (12) jeweils so ausgebildet sind, daß sie im eingekuppelten Zustand ein relatives Verschwenken ihrer beiden Kupplungsteile (13, 14) sowohl um eine in Förderrichtung (4) verlaufende Schwenkachse als auch um eine rechtwinklig zur Förderrichtung (4) verlaufende Schwenkachse ermöglichen.

4. Kipp-Förderelement nach Anspruch 3, **dadurch gekennzeichnet, daß** die Stützgelenke (12) als entkuppelbare Kugelgelenke ausgebildet sind.

5. Kipp-Förderelement nach Anspruch 1, **dadurch gekennzeichnet, daß** die Stützgelenke (12) als Scharniergelenke ausgebildet sind (Fig. 3).

6. Kipp-Förderelement nach Anspruch 1, **dadurch gekennzeichnet, daß** die Förderschale (5) mit einem mit vertikalem Abstand unter ihrer Unterseite angeordneten, im wesentlichen rechtwinkligen Rahmen (40) verbunden ist, dessen Längsholme (41, 42) im wesentlichen in Förderrichtung (4) verlaufen, und dessen Querholm (43, 44) im wesentlichen quer zur Förderrichtung (4) verlaufen, wobei die Holme (41-44) jeweils das mit der Förderschale (5) verbundene Kupplungsteil eines Stützgelenkes (12) bilden und in der Grundstellung der Förderschale (5) jeweils in wenigstens einer fest mit dem Unterwagen (9) verbundenen, nach oben offenen Lagerschale (46) drehbeweglich abgestützt sind, welche das andere Kupplungsteil bildet, und jeweils mittels eines lösbaren Verriegelungsmittels (45) in ihrem abgestützten Einkuppelzustand zu halten sind.

7. Kipp-Förderelement nach Anspruch 6, **dadurch gekennzeichnet, daß** die Holme (41-44) jeweils wenigstens im Bereich ihrer Lagerstellen einen kreisförmigen Querschnitt aufweisen; und daß die Verriegelungsmittel (45) jeweils einen vorzugsweise zylindrischen Anschlag (46) aufweisen, der aus einer zurückgezogenen Entriegelungsstellung so über den zylindrischen Abschnitt des betreffenden Holmes zu bewegen ist, daß er unmittelbar benachbart zu diesem angeordnet ist.

8. Kipp-Förderelement nach einem oder mehreren der vorhergehenden Ansprüche, **dadurch gekennzeichnet, daß** die Stützgelenke (12) im eingekuppelten Zustand elektromechanisch zu vernegeln bzw. zu entriegeln sind.

9. Kipp-Förderelement nach einem oder mehreren der vorhergehenden Ansprüche, **dadurch gekennzeichnet, daß** der Kippantrieb (15) als zwischen der Förderschale (5) und dem Unterwagen (9) angeordneter Krafterzeuger ausgebildet ist, mittels dessen der in der Grundstellung der Förderschale (5) vorhandene Abstand zwischen dem mittleren Bereich der Förderschale (5) und dem Unterwagen (9) gesteuert zu vergrößern bzw. wieder auf den in der Grundstellung vorhandenen Abstand zu bringen ist.

10. Kipp-Förderelement nach Anspruch 9, **dadurch gekennzeichnet, daß** zwischen der Förderschale (5) und dem Unterwagen (9) ein als Parallelogrammgestänge ausgebildetes Gelenkgestänge (18) angeordnet ist, welches mit einem oberen Gestängegelenk (19) im wesentlichen mittig an die Förderschale (5) angelenkt ist, und welches mit seinem darunterliegenden Gestängegelenk (20) an den Unterwagen (9) angelenkt ist; und daß der Krafterzeuger (15) zwischen den beiden mittleren Gestängegelenken (16, 17) angeordnet ist.

11. Kipp-Förderelement nach Anspruch 10, **dadurch gekennzeichnet, daß** das Gelenkgestänge (18) so angeordnet ist, daß es sich in Förderrichtung (4) erstreckt.

12. Kipp-Förderelement nach einem oder mehreren der Ansprüche 9 bis 11, **dadurch gekennzeichnet, daß** ein pneumatisch zu betätigender Krafterzeuger (15) vorgesehen ist.

13. Kipp-Förderelement nach Anspruch 12, **dadurch gekennzeichnet, daß** der Krafterzeuger (15) aus einem geschlossenen, elastischen Schlauchabschnitt besteht, der an seinen beiden Endabschnitten gelenkig mit den beiden mittleren Gestängegelenken (16, 17) verbunden und unter Verkürzung seiner Länge gesteuert mit Druckluft zu beaufschlagen ist.
